# EUROPÄISCHE PATENTSCHRIFT

(11) **EP 2 090 498 B1**
(45) Veröffentlichungstag und Bekanntmachung des Hinweises auf die Patenterteilung: **21.09.2016**
(21) Anmeldenummer: 09000465.6
(22) Anmeldetag: 15.01.2009
(51) Int. Cl.: B62D 15/02

(54) **Verfahren zum Betrieb eines Fahrassistenzsystems beim Einparken eines Fahrzeugs in eine Parklücke**
Method for operating a driver assistance system when parking a vehicle in a parking space
Procédé de fonctionnement d'un système d'assistance du conducteur lors du stationnement d'un véhicule sur une place de stationnement

(30) Priorität: 13.02.2008 DE 102008008957
(43) Veröffentlichungstag der Anmeldung: 19.08.2009
(73) Patentinhaber: Valeo Schalter und Sensoren GmbH, 74321 Bietigheim-Bissingen (DE)
(72) Erfinder: Bammert, Jens, 70176 Stuttgart (DE); Hoffsommer, Klaus, 74321 Bietigheim-Bissingen (DE); Kossmann, Simon, 71287 Weissach (DE); Vovkushevsky, Vsevolod, 74321 Bietigheim-Bissingen (DE)

(56) Entgegenhaltungen:
- EP-A2- 1 562 054
- DE-A1-102004 027 869
- DE-A1-102006 003 675

## Beschreibung

### Stand der Technik

Die Erfindung betrifft ein Verfahren zum Betrieb eines Fahrassistenzsystems beim Einparken eines Fahrzeugs in eine Parklücke gemäß dem Oberbegriff des Anspruchs 1, eine Fahrassistenzvorrichtung gemäß dem Oberbegriff des Anspruchs 11 sowie ein Computerprogrammprodukt gemäß dem Oberbegriff des Anspruchs 15.

EP1562054A2 beschreibt eine Fahrerassistenzvorrichtung zur Vermeidung einer Kollision einer Fahrzeugtüre mit einem Hindernis bei einem Öffnen der Fahrzeugtüre vorgeschlagen, bei der eine Ausgabeeinheit zur Ausgabe von Informationen zur Türöffnung dient. Eine Messeinheit ermittelt den Abstand des Fahrzeugs zu Hindernissen, um diese Informationen ausgeben zu können. Bei einer Vorbeifahrt an dem Hindernis wird hierbei das Messergebnis einer Position an dem Fahrweg des Fahrzeugs zugeordnet. Die Ausgabeeinheit dient zur Ausgabe eines Anhaltepunkts zum Öffnen der Fahrzeugtüre.

DE102004027869A1 offenbart ein Verfahren zum automatischen Einparken eines Kraftfahrzeugs, bei dem das Kraftfahrzeug nach dem Aussteigen des Fahrers in einem automatisierten Einparkvorgang selbständig vorwärts in eine Parklücke manövriert, die zur Fahrerseite und zur Beifahrerseite des Kraftfahrzeugs hin begrenzt ist.

Bekannte Fahrassistenzvorrichtungen zur Unterstützung eines Fahrers eines Fahrzeugs beim Einparken, im Folgenden kurz als Einparksysteme bezeichnet, helfen dem Fahrer aktiv in eine seitlich längs der Fahrbahn liegende Parklücke einzuparken. Dabei vermißt das Einparksystem mit beispielsweise seitlich am Fahrzeug angebrachten Sensoren, beispielsweise Ultraschallsensoren (Ultrasonic Park Assist Sensoren; UPA-Sensoren), eine mögliche Parklücke, berechnet aus den Lückendaten eine Einparktrajektorie und steuert das Fahrzeug beispielsweise durch aktiven Lenkeingriff oder durch Fahranweisungen an den Fahrer in die Parklücke. Während des Einparkvorgangs bzw. beim Einparken wird die Distanz zu die Parklücke begrenzenden Objekten durch die Ultraschallsensoren über-wacht.

Beispielsweise offenbart DE102006003675A1, im Einklang mit den jeweiligen Oberbegriffen von Ansprüchen 1 und 11, ein Verfahren und eine Vorrichtung zur Festlegung einer bevorzugten Endorientierung eines Kraftfahrzeugs beim Einparken in eine Parklücke für ein Parkassistenzsystem des Kraftfahrzeugs. Das Verfahren umfasst folgende Schritte: ein Empfangen von Sensorinformationen; ein Auswerten der Sensorinformationen zum Bestimmen der bevorzugten Endorientierung des Kraftfahrzeugs in der Parklücke; und ein Bereitstellen einer Endorientierungsinformation, basierend auf der Auswertung, wobei die Endorientierungsinformation die Endorientierung des Kraftfahrzeugs in der Parklücke angibt; wobei das Empfangen von Sensorinformationen ein Empfangen von Sensorinformationen über das Kraftfahrzeug umfasst und beim Auswerten ein Orientierungsbestimmungsverfahren angewendet wird, bei dem ein Wert fuer die bevorzugte Endorientierung aus den Sensorinformationen über das Kraftfahrzeug ermittelt wird.

Je nach Parksituation und Voreinstellungen bzw. Parametern des Einparksystems kommt es dabei vor, dass ein Mitfahrer, beispielsweise ein Beifahrer, nur erschwert oder gar nicht aussteigen kann, da das entlang der Einparktrajektorie in eine Endposition in der Parklücke manövrierte Fahrzeug in der Parklücke z.B. zu dicht an einer Mauer, einem Abhang, einer Bepflanzung oder dergleichen abgestellt wird, oder dass Parkraum verschwendet wird, da die Voreinstellungen einen großen seitlichen Abstand zu einem die Parklücke seitlich begrenzenden Objekt vorschreiben, um immer ein Aussteigen eines Mitfahrers zu ermöglichen.

Als eine Aufgabe der Erfindung kann es deshalb angesehen werden, ein Verfahren zu entwickeln, welches eine bessere Nutzung des vorhandenen Parkraumes ermöglicht.

### Offenbarung der Erfindung

Die Aufgabe wird erfindungsgemäß gelöst durch ein Verfahren gemäß Anspruch 1, eine Fahrassistenzvorrichtung gemäß Anspruch 11 sowie ein Computerprogrammprodukt gemäß Anspruch 15.

Es wird ein Verfahren zur Unterstützung eines Fahrers eines Fahrzeugs beim Einparken in eine seitlich längs zu einer Fahrbahn befindliche Parklücke offenbart, bei welchem Verfahren zunächst eine mögliche Parklücke vermessen wird, indem vorzugsweise durch Ultraschallsensoren der Abstand zu die Parklücke längs, also vorn und hinten, sowie seitlich begrenzenden Objekten erfasst wird, anschließend aus den Lückendaten bzw. anhand der durch die Vermessung gewonnenen Daten eine Einparktrajektorie mit einer Endposition des Fahrzeugs in der Parklücke berechnet wird, und dann das Fahrzeug beispielsweise durch aktiven Lenkeingriff oder durch Fahranweisungen an den Fahrer in die Endposition gesteuert wird. Neben den durch die Vermessung der Parklücke gewonnenen Daten wird zusätzlich ein Mitfahrerstatus, zum Beispiel durch die Benutzung des Gurtschlosses, bzw. des Türstatus vor Beginn einer Fahrt benutzt, um die Endposition des Fahrzeugs in der Parklücke abhängig von der Parklückengeometrie zu ermitteln. Beim Einparken kann auch aufgrund einer Detektierung hoher seitlicher Objekte, zum Beispiel durch Parkhilfesensoren, eine Bahnkorrektur erfolgt

Vorteile der Erfindung gegenüber dem Stand der Technik ergeben sich insbesondere dadurch, dass nunmehr Fahrzeuge in beispielsweise kleine Parklücken längs der Fahrbahn eingeparkt werden können, wobei abhängig von einer seitlichen Begrenzung, etwa abhängig davon, ob es sich bei der seitlichen Begrenzung um einen Bordstein, eine Mauer oder ein Gebüsch handelt, sowie abhängig von einem Mitfahrerstatus in dem Fahrzeug, also abhängig davon, welche Sitzplätze in dem Fahrzeug besetzt bzw. belegt sind, unterschiedliche Endpositionen des Fahrzeugs in der Parklücke eingenommen werden, wodurch der vorhandene Parkraum wesentlich besser ausgenutzt werden kann.

Vorzugsweise wird bei einem Mitfahrerstatus, bei dem ein Sitzplatz auf der Beifahrerseite des Fahrzeugs belegt ist, ein größerer Abstand der Endposition zu einem die Parklücke auf der Beifahrerseite seitlich begrenzenden Objekt eingehalten, als bei einem Mitfahrerstatus, bei dem alle Sitzplätze auf der Beifahrerseite des Fahrzeugs unbelegt sind.

Eine vorteilhafte Ausgestaltung der Erfindung sieht vor, dass die Höhe mindestens eines die Parklücke seitlich begrenzenden Objekts erfasst wird, wobei die Berechnung bzw. Planung der Einparktrajektorie und deren Endposition abhängig von der Höhe des mindestens einen eine Parklücke seitlich begrenzenden Objekts ist.

Erfindungsgemäß ist die Planung einer Einparktrajektorie vorzugsweise abhängig von der Höhe eines oder mehrerer eine Parklücke seitlich begrenzenden Objekts bzw. Objekten sowie einem beispielsweise anhand einer Sitzplatzbelegungserkennung gewonnenen Mitfahrerstatus.

Eine besonders vorteilhafte Ausgestaltung der Erfindung sieht vor, dass
- bei einem niedrigen, die Parklücke seitlich begrenzenden Objekt unabhängig vom Mitfahrerstatus ein fest eingestellter, geringer Abstand der Endposition zu dem Objekt eingehalten wird,
- bei einem hohen, die Parklücke seitlich begrenzenden Objekt in Verbindung mit einem Mitfahrerstatus, bei dem ein Sitzplatz auf der Beifahrerseite des Fahrzeugs belegt ist, ein Abstand der Endposition zu einem die Parklücke auf der Beifahrerseite seitlich begrenzenden Objekt eingehalten wird, der ausreichend ist, damit ein Mitfahrer auf der Beifahrerseite noch bequem aussteigen kann, und
- bei einem hohen, die Parklücke seitlich begrenzenden Objekt in Verbindung mit einem Mitfahrerstatus, bei dem ein Sitzplatz auf der Beifahrerseite des Fahrzeugs unbelegt ist, ein geringerer, zur Verhinderung einer Kollision des Fahrzeugs mit dem Objekt ausreichender Abstand der Endposition zu einem die Parklücke auf der Beifahrerseite seitlich begrenzenden Objekt eingehalten wird, als bei einem Mitfahrerstatus, bei dem mindestens ein Sitzplatz auf der Beifahrerseite des Fahrzeugs belegt ist.

Der Mitfahrerstatus kann beispielsweise anhand einer Sitzplatzbelegungserkennung, des Gurtschlosses oder anhand des Status der Türen des Fahrzeugs vor Beginn der Fahrt ermittelt werden.

Die Endposition des Fahrzeugs in der Parklücke ist vorzugsweise durch den Fahrer des Fahrzeugs beispielsweise mittels einer Mensch-Maschine-Schnittstelle beeinfluss- bzw. vorwählbar.

Eine vorteilhafte Ausgestaltung der Erfindung sieht vor, dass bei einem hohen eine Parklücke seitlich begrenzenden Objekt unabhängig vom Mitfahrerstatus ein fest eingestellter Abstand der Endposition zu dem Objekt eingehalten wird, welcher zumindest zum Aus- oder Einsteigen auf der Beifahrerseite des Fahrzeugs ausreicht, und dass bei einem niedrigen seitlichen Objekt ein geringerer Abstand der Endposition zu dem Objekt eingehalten wird, als der fest eingestellte Abstand bei einem hohen seitlichen Objekt.

Die Erfindung ist insbesondere in Verbindung mit einer Fahrassistenzvorrichtung zur Unterstützung eines Fahrers eines Fahrzeuges beim Einparken in eine Parklücke vorteilhaft anwendbar.

Eine solche Fahrassistenzvorrichtung umfasst Mittel zur Vermessung und Erfassung von eine Parklücke begrenzenden Objekten sowie einen mit den Mitteln verbundenen Mikroprozessor mit zugehörigen Speichermitteln zur Berechnung einer Einparktrajektorie zum Einparken eines Fahrzeugs in eine Endposition in einer seitlichen Parklücke, sowie Mittel zur Durchführung des Einparkvorganges entlang der Einparktrajektorie in die Endposition, und mit dem Mikroprozessor verbundenen Mittel zur Bestimmung eines Mitfahrerstatus, um die des Fahrzeugs in der Parklücke zu bestimmen. Bei den Mitteln zur Durchführung des Einparkvorgangs kann es sich beispielsweise um eine geeignete, beispielsweise zum Abfahren der Einparktrajektorie erforderliche Lenkeinschläge und/oder Fahrbewegungen und/oder Fahrtrichtungen darstellende Anzeige im Armaturenbrett und/oder um Mittel zur Durchführung eines aktiven Lenkeingriffs und/oder um Mittel zur Durchführung aktiver Fahrzeugbewegungen handeln. Die Mittel zur Vermessung und Erfassung von eine Parklücke begrenzenden Objekten überwachen vorzugsweise gleichzeitig den Abstand zu zumindest die Parklücke begrenzenden Objekten während des Einparkvorgangs zur gleichzeitigen Kollisionsverhütung.

Eine vorteilhafte Anwendung des erfindungsgemäßen Verfahrens ergibt sich in Verbindung mit einer Fahrassistenzvorrichtung, welche ein geführtes Einparken oder ein halbautomatisches Einparken, oder ein vollautomatisches Einparken ermöglicht.

Eine besonders vorteilhafte Ausgestaltung der Erfindung betrifft ein Computerprogrammprodukt gespeichert auf einem computerverwendbaren Medium, umfassend computerlesbare Programmmittel, welche bei Ausführung des Computerprogrammprodukts auf einem Mikroprozessor mit zugehörigen Speichermitteln oder auf einem Computer diesen zur Durchführung eines oben beschriebenen, erfindungsgemäßen Verfahrens veranlassen.

### Kurze Beschreibung der Zeichnung

Die Erfindung wird nachfolgend anhand der Figuren der Zeichnung erläutert. Dabei zeigen:
- Fig. 1: Eine schematische Darstellung einer ersten Parksituation, bei der eine Parklücke durch ein niedriges seitliches Objekt begrenzt ist.
- Fig. 2: Eine schematische Darstellung einer zweiten Parksituation, bei der eine Parklücke durch ein hohes seitliches Objekt begrenzt ist und der Beifahrersitz eines einparkenden Fahrzeugs unbelegt ist.
- Fig. 3: Eine schematische Darstellung einer dritten Parksituation, bei der eine Parklücke durch ein hohes seitliches Objekt begrenzt ist und der Beifahrersitz eines einparkenden Fahrzeugs belegt ist.
- Fig. 4: Eine schematische Darstellung einer vierten Parksituation, bei der eine Parklücke durch ein hohes seitliches Objekt begrenzt ist und der Beifahrersitz eines einparkenden Fahrzeugs belegt ist.

### Ausführungsform der Erfindung

Erfindungsgemäß ist ein Verfahren vorgesehen, welches zur Planung einer Einparktrajektorie eines mit einem Einparksystem ausgestatteten Fahrzeugs in eine Parklücke neben den durch eine Parklückenvermessung gewonnenen Daten zusätzlich einen Mitfahrerstatus, zum Beispiel durch die Benutzung des Gurtschlosses, bzw. Türstatus vor Beginn einer Fahrt benutzt, um eine Endposition des Fahrzeugs in der Parklücke abhängig von der Parklückengeometrie zu ermitteln. Die Planung einer Einparktrajektorie ist vorzugsweise abhängig von der Höhe eines oder mehrerer eine Parklücke seitlich begrenzenden Objekts bzw. Objekten sowie einem beispielsweise anhand einer Sitzplatzbelegungserkennung gewonnenen Mitfahrerstatus.

Ein erfindungsgemäßes Verfahren läuft vorzugsweise wie folgt ab:
Ein Einparksystem eines Fahrzeugs hat eine gültige, das heißt zumindest in ihrer Länge ausreichend große Parklücke gemeldet. Das Einparksystem ermittelt aus den Daten der Parklückenvermessung und dem Mitfahrerstatus im Fahrzeug eine optimale Endposition des Fahrzeugs in der Parklücke nach dem Einparkvorgang. Dadurch wird bei einem hohen seitlichen Objekt und einer möglichst tiefen Positionierung des Fahrzeugs in der Parklücke eine Kollisionsgefahr vermindert und eine Ausstiegsmöglichkeit der Mitfahrer gewährleistet.

Der Mitfahrerstatus kann beispielsweise durch Rückgriff auf ähnliche Informationsquellen wie eine Anschnall- bzw. Sicherheitsgurterinnerung ermittelt werden. So ist beispielsweise denkbar, den Mitfahrerstatus anhand einer Sitzplatzbelegungserkennung zu ermitteln. Ebenso ist denkbar, den Mitfahrerstatus anhand des Status der Türen des Fahrzeugs vor Beginn der Fahrt zu ermitteln. Wurde eine Tür vor Beginn der Fahrt geöffnet, ist davon auszugehen, dass ein durch die Tür zugänglicher Sitz belegt ist, andernfalls nicht. Eine Sitzplatzbelegungserkennung anhand des Status der Türen ist nicht sehr genau, weshalb diese Methode kritisch zu betrachten ist.

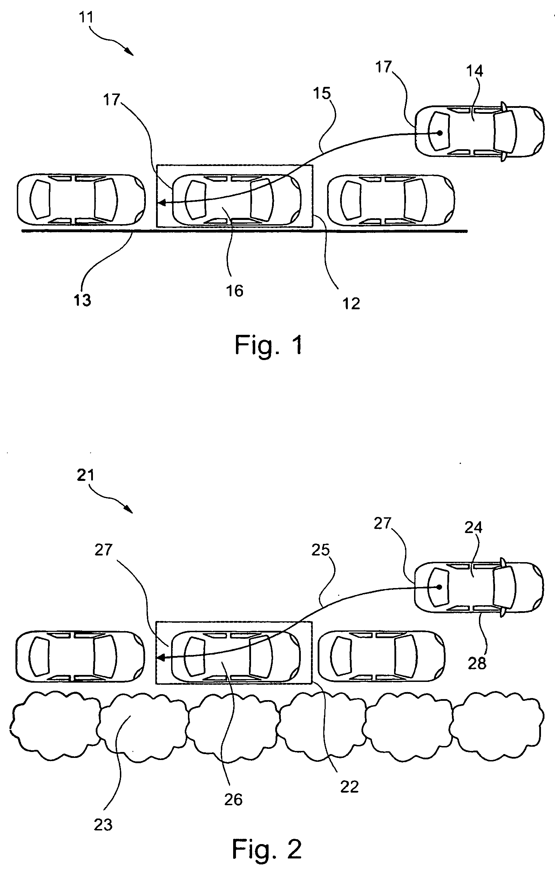

Fig. 1 zeigt eine Parksituation 11, bei der eine Parklücke 12 durch ein niedriges seitliches Objekt 13, beispielsweise einen Bordstein 13 bzw. eine Bordsteinkante 13, begrenzt ist. Ein ein erfindungsgemäßes Verfahren ausführendes Einparksystem eines einparkenden Fahrzeugs 14 ermittelt aus den Daten der Lückenvermessung und dem Mitfahrerstatus eine Einparktrajektorie 15, die das Fahrzeug 14 in eine Endposition 16 tief in der Parklücke 12 positioniert. Dabei darf das Heck 17 des Fahrzeugs 14 über den Bordstein 13, also über niedrige seitliche Objekte, während des Einparkvorgangs hinausragen.

Fig. 2 zeigt eine Parksituation 21, bei der eine Parklücke 22 durch ein hohes seitliches Objekt 23, beispielsweise ein Gebüsch 23, begrenzt ist. Der Beifahrersitz, ebenso wie der Rücksitz auf der Beifahrerseite 28 ist unbelegt bzw. nicht besetzt. Ein ein erfindungsgemäßes Verfahren ausführendes Einparksystem eines einparkenden Fahrzeugs 24 ermittelt aus den Daten der Lückenvermessung und dem Mitfahrerstatus eine Einparktrajektorie 25, die das Fahrzeug 24 in eine Endposition 26 möglichst tief in der Parklücke 22 positioniert, ohne dass das Heck 27 des Fahrzeugs 24 das seitliche Objekt 23 überragen würde, wodurch eine Kollisionsgefahr entstünde.

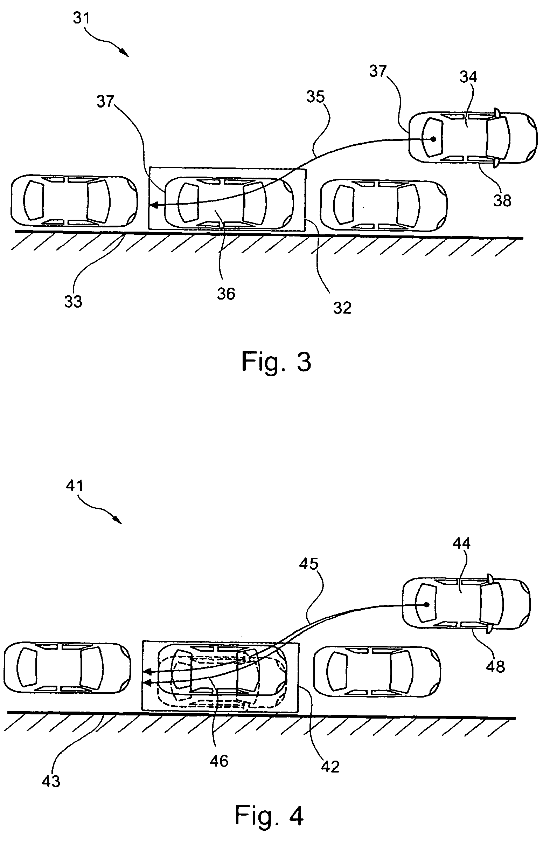

Fig. 3 zeigt eine Parksituation 31, bei der eine Parklücke 32 durch ein hohes seitliches Objekt 33, beispielsweise eine Wand 33, begrenzt ist. Der Beifahrersitz, und/oder der Rücksitz auf der Beifahrerseite 38 sind belegt bzw. besetzt. Ein ein erfindungsgemäßes Verfahren ausführendes Einparksystem eines einparkenden Fahrzeugs 34 ermittelt aus den Daten der Lückenvermessung und dem Mitfahrerstatus eine Einparktrajektorie 35, die das Fahrzeug 34 in eine Endposition 36 so tief in der Parklücke 32 positioniert, dass das Heck 37 des Fahrzeugs 34 das seitliche Objekt 33 dann nicht überragt und ein Mitfahrer auf der Beifahrerseite 38 noch bequem aussteigen kann.

Fig. 4 zeigt eine Parksituation 41, bei der eine Parklücke 42 durch ein hohes seitliches Objekt 43, beispielsweise eine Wand 43, begrenzt ist. Der Beifahrersitz, und/oder der Rücksitz auf der Beifahrerseite 48 sind belegt bzw. besetzt. Der Fahrer des Fahrzeugs 44 kann eine Endposition 46 des Fahrzeugs 44 in der Parklücke 42 vorwählen, beispielsweise mittels einer geeigneten MenschMaschine-Schnittstelle (HMI; Human-Machine-Interface). Ein ein erfindungsgemäßes Verfahren ausführendes Einparksystem eines einparkenden Fahrzeugs 44 ermittelt aus den Daten der Lückenvermessung und dem Mitfahrerstatus mindestens zwei Einparktrajektorien 45, eine erste, die das Fahrzeug 44 in eine Endposition 46 nah zum seitlichen Objekt 43 positioniert, sowie eine zweite, die das Fahrzeug 44 in eine Endposition 46 mit Abstand zum seitlichen Objekt 43 positioniert. Der Fahrer des Fahrzeugs 44 wählt via HMI die gewünschte Endposition 46 des Einparkvorgangs.

Wichtig ist hervorzuheben, dass es auch im Rahmen der Erfindung liegt, bei einem hohen seitlichen Objekt einen fest eingestellten Abstand zu dem Objekt einzuhalten, unabhängig vom Mitfahrerstatus. Wesentlich ist dabei, dass bei einem niedrigen seitlichen Objekt ein geringerer Abstand eingehalten wird, als der fest eingestellte Abstand bei einem hohen seitlichen Objekt.

## Patentansprüche

1. Verfahren zum Betrieb eines Fahrassistenzsystems beim Einparken eines Fahrzeugs (14, 24, 34, 44) in eine seitliche Parklücke (12, 22, 32, 42), wobei zunächst eine Parklücke (12, 22, 32, 42) vermessen wird, indem der Abstand zu die Parklücke (12, 22, 32, 42) längs sowie seitlich begrenzenden Objekten (13, 23, 33, 43) erfasst wird, anschließend eine Einparktrajektorie (15, 25, 35, 45) mit einer Endposition (16, 26, 36, 46) des Fahrzeugs (14, 24, 34, 44) in der Parklücke (12, 22, 32, 42) berechnet wird und dann das Fahrzeug (14, 24, 34, 44) in die Endposition (16, 26, 36, 46) gesteuert wird, **dadurch gekennzeichnet, dass** neben den durch die Vermessung der Parklücke (12, 22, 32, 42) gewonnenen Daten zusätzlich ein Mitfahrerstatus ermittelt wird, um die Endposition (16, 26, 36, 46) des Fahrzeugs in der Parklücke (12, 22, 32, 42) zu bestimmen.

2. Verfahren nach Anspruch 1, **dadurch gekennzeichnet, dass** beim Einparken aufgrund einer Detektierung hoher seitlicher Objekte eine Bahnkorrektur erfolgt.

3. Verfahren nach Anspruch 1 oder 2, **dadurch gekennzeichnet, dass** bei einem Mitfahrerstatus, bei dem ein Sitzplatz auf der Beifahrerseite (28) des Fahrzeugs (14, 24, 34, 44) belegt ist, ein größerer Abstand der Endposition (16, 26, 36, 46) zu einem die Parklücke auf der Beifahrerseite (28, 38, 48) seitlich begrenzenden Objekt (13, 23, 33, 43) eingehalten wird, als bei einem Mitfahrerstatus, bei dem alle Sitzplätze auf der Beifahrerseite (28, 38, 48) des Fahrzeugs (14, 24, 34, 44) unbelegt sind.

4. Verfahren nach Anspruch 1,2 oder 3, **dadurch gekennzeichnet, dass** die Höhe mindestens eines die Parklücke (12, 22, 32, 42) seitlich begrenzenden Objekts (13, 23, 33, 43) erfasst wird, wobei die Endposition (16, 26, 36, 46) abhängig von der Höhe des mindestens einen die Parklücke (12, 22, 32, 42) seitlich begrenzenden Objekts (13, 23, 33, 43) ist.

5. Verfahren nach Anspruch 4, **dadurch gekennzeichnet, dass**
- bei einem niedrigen, die Parklücke (12, 22, 32, 42) seitlich begrenzenden Objekt (13) unabhängig vom Mitfahrerstatus ein fest eingestellter, geringer Abstand der Endposition (16) zu dem Objekt (13) eingehalten wird,
- bei einem hohen, die Parklücke (22, 32, 42) seitlich begrenzenden Objekt (23, 33, 43) in Verbindung mit einem Mitfahrerstatus, bei dem ein Sitzplatz auf der Beifahrerseite (28, 38, 48) des Fahrzeugs (24, 34, 44) belegt ist, ein Abstand der Endposition (26, 36, 46) zu dem die Parklücke (22, 32, 42) auf der Beifahrerseite seitlich begrenzenden Objekt (23, 33, 43) eingehalten wird, der ausreichend ist, damit ein Mitfahrer auf der Beifahrerseite (28, 38, 48) aussteigen kann und
- bei einem hohen, die Parklücke (22, 32, 42) seitlich begrenzenden Objekt in Verbindung mit einem Mitfahrerstatus, bei dem ein Sitzplatz auf der Beifahrerseite (28, 38, 48) des Fahrzeugs (24, 34, 44) unbelegt ist, ein geringerer, zur Verhinderung einer Kollision des Fahrzeugs (24, 34, 44) mit dem Objekt (23, 33, 43) ausreichender Abstand der Endposition (16, 26, 36, 46) zu dem die Parklücke (22, 32, 42) auf der Beifahrerseite (28, 38, 48) seitlich begrenzenden Objekt (23, 33, 43) eingehalten wird, als bei einem Mitfahrerstatus, bei dem mindestens ein Sitzplatz auf der Beifahrerseite (28, 38, 48) des Fahrzeugs (14, 24, 34, 44) belegt ist.

6. Verfahren nach einem der vorhergehenden Ansprüche, **dadurch gekennzeichnet, dass** der Mitfahrerstatus anhand einer Sitzplatzbelegungserkennung ermittelt wird.

7. Verfahren nach einem der Ansprüche 1 bis 6, **dadurch gekennzeichnet, dass** der Mitfahrerstatus anhand einer Gurtschlossbenutzung ermittelt wird.

8. Verfahren nach einem der Ansprüche 1 bis 5, **dadurch gekennzeichnet, dass** der Mitfahrerstatus anhand des Status der Türen des Fahrzeugs (14, 24, 34, 44) vor Beginn der Fahrt ermittelt wird.

9. Verfahren nach einem der vorhergehenden Ansprüche, **dadurch gekennzeichnet, dass** die Endposition (16, 26, 36, 46) durch den Fahrer des Fahrzeugs (14, 24, 34, 44) beispielsweise mittels einer Mensch-Maschine-Schnittstelle beeinfluss- bzw. vorwählbar ist.

10. Verfahren nach einem der vorherigen Ansprüche, **dadurch gekennzeichnet, dass** bei einem hohen die Parklücke (12, 22, 32, 42) seitlich begrenzenden Objekt (23, 33, 43) unabhängig vom Mitfahrerstatus ein fest eingestellter Abstand der Endposition (26, 36, 46) zu dem Objekt (23, 33, 43) eingehalten wird, welcher zumindest zum Aus- oder Einsteigen auf der Beifahrerseite (28, 38, 48) des Fahrzeugs (24, 34, 44) ausreicht, und dass bei einem niedrigen seitlichen Objekt (13) ein geringerer Abstand der Endposition (16) zu dem Objekt (13) eingehalten wird, als der fest eingestellte Abstand bei einem hohen seitlichen Objekt (23, 33, 43).

11. Fahrassistenzvorrichtung zur Durchführung eines Verfahrens nach einem der Ansprüche 1 bis 10, umfassend Mittel zur Vermessung und Erfassung von eine Parklücke (12, 22, 32, 42) begrenzenden Objekten (13, 23, 33, 43), sowie einen mit den Mitteln verbundenen Mikroprozessor mit zugehörigen Speichermitteln zur Berechnung einer Einparktrajektorie (15, 25, 35, 45) zum Einparken eines Fahrzeugs (14, 24, 34, 44) in eine Endposition (16, 26, 36, 46) in einer seitlichen Parklücke (12, 22, 32, 42), sowie Mittel zur Durchführung eines Einparkvorgangs entlang der Einparktrajektorie (15, 25, 35, 45) in die Endposition (16, 26, 36, 46), **gekennzeichnet durch** mit dem Mikroprozessor verbundene Mittel zur Bestimmung eines Mitfahrerstatus, um die Endposition (16, 26, 36, 46) des Fahrzeugs in der Parklücke (12, 22, 32, 42) zu bestimmen.

12. Fahrassistenzvorrichtung nach Anspruch 11, **dadurch gekennzeichnet, dass** die Fahrassistenzvorrichtung ein geführtes Einparken oder ein halbautomatisches Ausparken, oder ein vollautomatisches Einparken ermöglicht.

13. Fahrassistenzvorrichtung nach Anspruch 11 oder 12, **dadurch gekennzeichnet, dass** die Mittel zur Bestimmung des Mitfahrerstatus Mittel zur Sitzplatzbelegungserkennung umfassen.

14. Fahrassistenzvorrichtung nach einem der Ansprüche 11 bis 13, **dadurch gekennzeichnet, dass** die Mittel zur Bestimmung des Mitfahrerstatus Mittel zur Ermittlung der Gurtschlossbenutzung oder Mittel zur Ermittlung des Status der Türen des Fahrzeugs (14, 24, 34, 44) vor Beginn der Fahrt umfassen.

15. Computerprogrammprodukt gespeichert auf einem computerverwendbaren Medium, umfassend computerlesbare Programmittel, welche bei Ausführung des Computerprogrammprodukts auf einem Mikroprozessor mit zugehörigen Speichermitteln oder auf einem Computer diesen zur Durchführung eines Verfahrens nach einem der Ansprüche 1 bis 10 veranlassen.

## Claims

1. Method for operating a driving assistance system when parking a vehicle (14, 24, 34, 44) in a lateral parking space (12, 22, 32, 42), wherein a parking space (12, 22, 32, 42) is first of all measured by recording the distance to objects (13, 23, 33, 43) longitudinally and laterally bounding the parking space (12, 22, 32, 42), a parking trajectory (15, 25, 35, 45) with an end position (16, 26, 36, 46) of the vehicle (14, 24, 34, 44) in the parking space (12, 22, 32, 42) is then calculated, and the vehicle (14, 24, 34, 44) is then controlled into the end position (16, 26, 36, 46), **characterized in that**, in addition to the data obtained from measuring the parking space (12, 22, 32, 42), a passenger status is additionally determined in order to determine the end position (16, 26, 36, 46) of the vehicle in the parking space (12, 22, 32, 42).

2. Method according to Claim 1, **characterized in that** a path correction is carried out during parking on account of high lateral objects being detected.

3. Method according to Claim 1 or 2, **characterized in that** a greater distance between the end position (16, 26, 36, 46) and an object (13, 23, 33, 43) laterally bounding the parking space on the passenger side (28, 38, 48) is complied with in the case of a passenger status in which a seat on the passenger side (28) of the vehicle (14, 24, 34, 44) is occupied than in the case of a passenger status in which all seats on the passenger side (28, 38, 48) of the vehicle (14, 24, 34, 44) are unoccupied.

4. Method according to Claim 1, 2 or 3, **characterized in that** the height of at least one object (13, 23, 33, 43) laterally bounding the parking space (12, 22, 32, 42) is recorded, the end position (16, 26, 36, 46) being dependent on the height of the at least one object (13, 23, 33, 43) laterally bounding the parking space (12, 22, 32, 42).

5. Method according to Claim 4, **characterized in that**
- in the case of a low object (13) laterally bounding the parking space (12, 22, 32, 42), irrespective of the passenger status, a firmly set, short distance between the end position (16) and the object (13) is complied with,
- in the case of a high object (23, 33, 43) laterally bounding the parking space (22, 32, 42), in conjunction with a passenger status in which a seat on the passenger side (28, 38, 48) of the vehicle (24, 34, 44) is occupied, a distance between the end position (26, 36, 46) and the object (23, 33, 43) laterally bounding the parking space (22, 32, 42) on the passenger side which is sufficient for a passenger on the passenger side (28, 38, 48) to be able to get out is complied with, and
- in the case of a high object laterally bounding the parking space (22, 32, 42), in conjunction with a passenger status in which a seat on the passenger side (28, 38, 48) of the vehicle (24, 34, 44) is unoccupied, a shorter distance between the end position (16, 26, 36, 46) and the object (23, 33, 43) laterally bounding the parking space (22, 32, 42) on the passenger side (28, 38, 48), which suffices to prevent a collision between the vehicle (24, 34, 44) and the object (23, 33, 43), is complied with than in the case of a passenger status in which at least one seat on the passenger side (28, 38, 48) of the vehicle (14, 24, 34, 44) is occupied.

6. Method according to one of the preceding claims, **characterized in that** the passenger status is determined on the basis of seat occupancy detection.

7. Method according to one of Claims 1 to 6, **characterized in that** the passenger status is determined on the basis of seat-belt lock use.

8. Method according to one of Claims 1 to 5, **characterized in that** the passenger status is determined on the basis of the status of the doors of the vehicle (14, 24, 34, 44) before the start of the journey.

9. Method according to one of the preceding claims, **characterized in that** the end position (16, 26, 36, 46) can be influenced or preselected by the driver of the vehicle (14, 24, 34, 44), for example by means of a man-machine interface.

10. Method according to one of the preceding claims, **characterized in that**, in the case of a high object (23, 33, 43) laterally bounding the parking space (12, 22, 32, 42), irrespective of the passenger status, a firmly set distance between the end position (26, 36, 46) and the object (23, 33, 43), which suffices at least for getting in or out of the vehicle on the passenger side (28, 38, 48) of the vehicle (24, 34, 44), is complied with, and **in that**, in the case of a low lateral object (13), a shorter distance between the end position (16) and the object (13) than the firmly set distance in the case of a high lateral object (23, 33, 43) is complied with.

11. Driving assistance apparatus for carrying out a method according to one of Claims 1 to 10, comprising means for measuring and recording objects (13, 23, 33, 43) bounding a parking space (12, 22, 32, 42), and a microprocessor which is connected to the means and has associated storage means for calculating a parking trajectory (15, 25, 35, 45) for parking a vehicle (14, 24, 34, 44) in an end position (16, 26, 36, 46) in a lateral parking space (12, 22, 32, 42), and means for carrying out a parking process along the parking trajectory (15, 25, 35, 45) into the end position (16, 26, 36, 46), **characterized by** means which are connected to the microprocessor and are intended to determine a passenger status in order to determine the end position (16, 26, 36, 46) of the vehicle in the parking space (12, 22, 32, 42).

12. Driving assistance apparatus according to Claim 11, **characterized in that** the driving assistance apparatus enables guided parking or semiautomatic driving out of a parking space or fully automatic parking.

13. Driving assistance apparatus according to Claim 11 or 12, **characterized in that** the means for determining the passenger status comprise means for seat occupancy detection.

14. Driving assistance apparatus according to one of Claims 11 to 13, **characterized in that** the means for determining the passenger status comprise means for determining seat-belt lock use or means for determining the status of the doors of the vehicle (14, 24, 34, 44) before the start of the journey.

15. Computer program product stored on a computerusable medium, comprising computer-readable program means which, when the computer program product is executed on a microprocessor having associated storage means or on a computer, cause it to carry out a method according to one of Claims 1 to 10.

## Revendications

1. Procédé de gestion d'un système d'assistance à la conduite lors d'une manoeuvre de stationnement d'un véhicule (14, 24, 34, 44) dans un emplacement de stationnement latéral (12, 22, 32, 42), dans lequel
un emplacement de stationnement (12, 22, 32, 42) est d'abord mesuré en saisissant la distance par rapport à l'emplacement de stationnement (12, 22, 32, 42) ainsi qu'à des objets (13, 23, 33, 43) qui le délimitent latéralement,
une trajectoire (15, 25, 35, 45) de manoeuvre de stationnement présentant une position finale (16, 26, 36, 46) du véhicule (14, 24, 34, 44) dans l'emplacement de stationnement (12, 22, 32, 42) est calculée et
le véhicule (14, 24, 34, 44) est ensuite amené dans la position finale (16, 26, 36, 46),
**caractérisé en ce que**
en plus des données saisies par la mesure de l'emplacement de stationnement (12, 22, 32, 42), un statut de passager est saisi pour déterminer la position finale (16, 26, 36, 46) du véhicule dans l'emplacement de stationnement (12, 22, 32, 42).

2. Procédé selon la revendication 1, **caractérisé en ce que** lors de la manoeuvre de stationnement, une correction de piste a lieu sur la base de la détection d'objets latéraux élevés.

3. Procédé selon les revendications 1 ou 2, **caractérisé en ce que** lorsque le statut de passager est tel que le siège côté passager (28) du véhicule (14, 24, 34, 44) est occupé, la distance respectée entre la position finale (16, 26, 36, 46) et un objet (13, 23, 33, 43) qui délimite latéralement l'emplacement de stationnement du côté (28, 38, 48) du passager est plus grande que lorsque le statut de passager indique que tous les sièges du côté passager (28, 38, 48) du véhicule (14, 24, 34, 44) sont inoccupés.

4. Procédé selon les revendications 1, 2 ou 3, **caractérisé en ce que** la hauteur d'au moins un objet (13, 23, 33, 43) qui délimite latéralement l'emplacement de stationnement (12, 22, 32, 42) est saisie, la position finale (16, 26, 36, 46) dépendant de la hauteur du ou des objets (13, 23, 33, 43) qui délimitent latéralement l'emplacement de stationnement (12, 22, 32, 42).

5. Procédé selon la revendication 4, **caractérisé en ce que** lorsque l'objet (13) qui délimite latéralement l'emplacement de stationnement (12, 22, 32, 42) est petit, quel que soit le statut de passager, la distance respectée entre la position finale (16) et l'objet (13) est petite et réglée de manière fixe, **en ce que** lorsque l'objet (23, 33, 43) qui délimite latéralement l'emplacement de stationnement (22, 32, 42) est élevé et que le statut de passager indique qu'un siège côté passager (28, 38, 48) du véhicule (24, 34, 44) est occupé, la distance respectée entre la position finale (26, 36, 46) et l'objet (23, 33, 43) qui délimite latéralement l'emplacement de stationnement (22, 32, 42) du côté passagers est suffisante pour qu'un passager situé du côté passager (28, 38, 48) puisse sortir et **en ce que** lorsque lorsqu'un objet qui délimite latéralement l'emplacement de stationnement (22, 32, 42) est élevé et que le statut des passagers est tel qu'un siège situé côté passager (28, 38, 48) du véhicule (24, 34, 44) est inoccupé, la distance respectée entre la position finale (16, 26, 36, 46) et l'objet (23, 33, 43) qui délimite latéralement l'emplacement de stationnement (22, 32, 42) du côté passager (28, 38, 48) pour empêcher une collision du véhicule (24, 34, 44) avec l'objet (23, 33, 43) est plus petite que lorsque le statut de passager indique qu'au moins un siège situé côté passager (28, 38, 48) du véhicule (14, 24, 34, 44) est occupé.

6. Procédé selon l'une des revendications précédentes, **caractérisé en ce que** le statut des passagers est saisi à l'aide d'une détection de l'occupation des sièges.

7. Procédé selon l'une des revendications 1 à 6, **caractérisé en ce que** le statut des passagers est déterminé à l'aide de l'utilisation des verrous de ceinture de sécurité.

8. Procédé selon l'une des revendications 1 à 5, **caractérisé en ce que** le statut du passager est saisi à l'aide du statut des portes du véhicule (14, 24, 34, 44) avant le début du trajet.

9. Procédé selon l'une des revendications précédentes, **caractérisé en ce que** le conducteur du véhicule (14, 24, 34, 44) peut agir pour présélectionner la position finale (16, 26, 36, 46), par exemple au moyen d'une interface homme-machine.

10. Procédé selon l'une des revendications précédentes, **caractérisé en ce que** lorsque l'objet (23, 33, 43) qui délimite latéralement l'emplacement de stationnement (12, 22, 32, 42) est élevé, quel que soit le statut de passager, une distance réglée fixement entre la position finale (26, 36, 46) et l'objet (23, 33, 43) est respectée et suffit au moins pour permettre l'entrée ou la sortie du côté passager (28, 38, 48) du véhicule (24, 34, 44) et **en ce que** lorsque l'objet latéral (13) est petit, la distance respectée entre la position finale (16) et l'objet (13) est plus petite que la distance réglée fixement pour un objet latéral (23, 33, 43) élevé.

11. Ensemble d'assistance à la conduite permettant la mise en oeuvre d'un procédé selon l'une des revendications 1 à 10 et comprenant
des moyens de mesure et de saisie d'objets (13, 23, 33, 43) qui délimitent un emplacement de stationnement (12, 22, 32, 42),
un microprocesseur relié à ces moyens et doté de moyens de mémoire pour calculer la trajectoire (15, 25, 35, 45) d'une manoeuvre de stationnement d'un véhicule (14, 24, 34, 44) dans une position finale (16, 26, 36, 46) d'un emplacement latéral de stationnement (12, 22, 32, 42) et
des moyens permettant d'exécuter une manoeuvre de stationnement le long de la trajectoire (15, 25, 35, 45) de stationnement jusque dans la position finale (16, 26, 36, 46),
**caractérisé par**
des moyens reliés au microprocesseur et déterminant un statut des passagers pour déterminer la position finale (16, 26, 36, 46) du véhicule dans l'emplacement de stationnement (12, 22, 32, 42).

12. Ensemble d'assistance à la conduite selon la revendication 11, **caractérisé en ce que** l'ensemble d'assistance à la conduite permet de guider une manoeuvre de stationnement, de sortir de manière semi-automatique d'un emplacement de stationnement ou d'exécuter une manoeuvre de stationnement entièrement automatique.

13. Ensemble d'assistance à la conduite selon les revendications 11 ou 12, **caractérisé en ce que** les moyens de détermination du statut des passagers comprennent des moyens de détection de l'occupation des sièges.

14. Ensemble d'assistance à la conduite selon l'une des revendications 11 à 13, **caractérisé en ce que** les moyens de détermination du statut des passagers comprennent des moyens de saisie de l'utilisation des verrous de ceinture de sécurité ou des moyens de détermination du statut des portes du véhicule (14, 24, 34, 44) avant le début du trajet.

15. Produit de programme informatique conservé en mémoire sur un support utilisable par ordinateur, et comprenant des moyens de programme lisibles par ordinateur qui, lorsque le produit de programme informatique est exécuté sur un microprocesseur doté de moyens de mémoire ou sur un ordinateur, permettent à ceux-ci de mettre en oeuvre un procédé selon l'une des revendications 1 à 10.
